# FASCICULE DE BREVET EUROPEEN

(11) **EP 1 908 254 B1**
(45) Date de publication et mention de la délivrance du brevet: **08.09.2010**
(21) Numéro de dépôt: 06778899.2
(22) Date de dépôt: 20.07.2006
(51) Int. Cl.: H04L 29/06

(54) **PROCEDE D'AFFECTATION D'UNE ADRESSE TEMPORAIRE A UN NOEUD MOBILE D'UN SYSTEME DE TELECOMMUNICATIONS, EQUIPEMENTS ET PROGRAMMES POUR LA MISE EN OEUVRE DU PROCEDE**
VERFAHREN ZUM VERGEBEN EINER VORÜBERGEHENDEN ADRESSE AN EINEN MOBILEN KNOTEN EINES TELEKOMMUNIKATIONSSYSTEMS, GERÄTE UND PROGRAMME ZU SEINER IMPLEMENTIERUNG
METHOD FOR ALLOCATING A TEMPORARY ADDRESS TO A MOBILE NODE OF A TELECOMMUNICATION SYSTEM, EQUIPMENTS AND PROGRAMS FOR IMPLEMENTING THE METHOD

(30) Priorité: 28.07.2005 FR 0508078
(43) Date de publication de la demande: 09.04.2008
(73) Titulaire: FRANCE TELECOM, 75015 Paris (FR)
(72) Inventeur: BINET, David, F-14550 Blainville-Sur-Orne (FR); KLAMM, Frédéric, F-14530 Luc sur mer (FR); GAABAB, Brahim, F-14200 Hérouville Saint Clair (FR)
(74) Mandataire: Cabinet Plasseraud
(86) Numéro de dépôt international: PCT/FR2006/001783
(87) Numéro de publication internationale: WO 2007/012732

(56) Documents cités:
- EP-A- 1 496 653
- US-A1- 2003 043 773
- US-A1- 2005 078 635
- PARK M LEE SAMSUNG ELECTRONICS J KORHONEN TELIASONERA J ZHANG UNIVERSITY OF YORK S: "Link Characteristics Information for Mobile IP" IETF STANDARD-WORKING-DRAFT, INTERNET ENGINEERING TASK FORCE, IETF, CH, no. 2, 8 juin 2005 (2005-06-08), XP015041641 ISSN: 0000-0004 cité dans la demande

## Description

La présente invention concerne les noeuds mobiles de communication, notamment ceux qui utilisent le protocole IP ("Internet Protocol").

Elle s'applique aussi bien aux terminaux en déplacement qu'aux réseaux en déplacement. La mobilité IP d'un terminal est habituellement gérée au niveau du terminal lui-même, alors que la mobilité d'un réseau est gérée par un équipement spécifique du réseau appelé routeur mobile. Dans la présente demande, le terme noeud désigne soit un routeur mobile soit un terminal en déplacement.

Par "réseau-mère", on entend le réseau IP auquel est rattaché le terminal ou réseau mobile lorsqu'il ne se trouve pas en déplacement. Par "réseau visité", on entend le réseau IP auquel se connecte le terminal ou réseau lorsque celui se trouve en situation de mobilité.

Par "agent mère", ou "home agent" dans la désignation anglaise courante, on entend l'entité du réseau mère auprès duquel un noeud en déplacement enregistre son adresse temporaire. Elle est chargée de retransmettre les flux à destination des noeuds en déplacement.

Le noeud mobile a une adresse de référence configurée avec le préfixe de son réseau mère. S'il s'agit d'un routeur, cette adresse de référence peut aussi être configurée à partir d'un préfixe affecté au réseau mobile (mnp). Cette adresse, appelée "adresse mère" ou "home address", est notée ici HoA. Il peut par ailleurs configurer une ou plusieurs adresses temporaires en utilisant un préfixe d'un réseau visité. Une telle adresse temporaire, ou "care-of address" est notée ici CoA.

Un noeud en situation de mobilité ou de déplacement utilise généralement des protocoles spécifiés par l'IETF ("Internet Engineering Task Force") pour communiquer en utilisant une de ses CoA, notamment les protocoles Mobile IP (voir "Mobility Support in IPv6", IETF, RFC 3775, juin 2004) et Nemo-BS (voir "Network Mobility (NEMO) Basic Support Protocol", IETF, RFC 3963, janvier 2005). Par communiquer, on entend bien évidemment une communication bidirectionnelle. Ce noeud mobile est alors attaché à un réseau visité.

La gestion de la mobilité IP des noeuds repose sur l'allocation temporaire d'une adresse IP au noeud lorsque celui-ci se trouve sur un réseau visité. Cette adresse est communiquée à l'agent mère qui se charge de retransmettre vers l'adresse temporaire les flux destinés au noeud en déplacement. Cela signifie que l'agent mère doit connaître la "position" (l'adresse temporaire) du noeud à chaque fois que celui-ci change de réseau d'attachement. Le noeud en déplacement doit donc informer son agent mère de sa nouvelle adresse temporaire dès qu'il perçoit un changement de réseau.

Les protocoles Mobile IP et Nemo-BS reposent sur un principe d'ancrage selon lequel l'agent mère du noeud mobile se charge de lui relayer le trafic lorsque ce noeud se trouve attaché à des réseaux visités. Le noeud mobile dispose d'un enregistrement associant son adresse temporaire (CoA) à son adresse mère (HoA). Afin de garder l'association à jour lors d'un changement de réseau, une procédure de transfert, ou "handover", en trois étapes a été définie:
1. Détection du mouvement: le noeud mobile constate qu'il a changé de réseau d'attache lors de son déplacement;
2. Configuration d'adresse: le noeud mobile configure une adresse temporaire (CoA);
3. Mise à jour d'association: le noeud mobile informe l'agent mère de sa nouvelle localisation (CoA).

Durant ses déplacements, il est possible qu'un terminal mobile configure plusieurs adresses temporaires correspondant à un ou plusieurs routeurs d'accès. Cependant, Mobile IP prévoit qu'une seule association (HoA, CoA) soit active (enregistrée) à un instant donné. Ainsi, avant d'envoyer un message de mise à jour d'association (étape 3), le noeud mobile a déjà fait le choix de sa CoA. L'agent mère ne peut qu'accuser réception et assurer le relais de trafic en cas de succès.

La sélection de CoA en elle-même n'est pas régie par une véritable règle. Le choix de l'une ou de l'autre des adresses temporaires est laissé au noeud mobile, qui ne modifie l'association qu'après avoir vérifié que l'association précédente n'est plus utilisable, généralement dans le cas où le routeur d'accès correspondant n'est plus joignable.

Un tel mécanisme et par exemple décrit dans le document US 2003/04 3773.

Pour les réseaux mobiles, la gestion de la mobilité selon Nemo-BS n'apporte aucune précision quant à la sélection de CoA. Pourtant, il s'agit de routeurs pour lesquels le choix peut avoir une forte implication sur les conditions d'utilisation dans le réseau mobile.

La procédure de sélection de CoA n'est pas effectuée uniquement au moment d'un handover. Un noeud mobile qui démarre effectue les trois étapes décrites ci-dessus et peut être amené à réaliser un choix de CoA.

Un noeud mobile peut aujourd'hui connaître certaines caractéristiques des attachements utilisables. Divers travaux sont conduits pour la détection de nouveaux réseaux d'accès, la détermination d'une identité pour chaque lien découvert et du ou des préfixes qu'il utilise, ainsi que la détection des capacités des routeurs (compression, contrôle d'accès, etc.).

Le document Park, et al., "Link Characteristics Information for Mobile IP" publié par l'IETF comme Internet Draft en juin 2005 (draft-daniel-mip-link-characteristic-02.txt) décrit la remontée par le noeud mobile de certaines informations relatives aux attachements. Il définit une option de mobilité pour remonter vers un correspondant ou l'agent mère les caractéristiques d'un attachement d'un type donné (IEEE 802. 11a, IEEE 802.11b, cellulaire, etc.). Ceci permet au correspondant ou à l'agent mère d'adapter son comportement en fonction des caractéristiques d'attachement qui lui ont été indiquées afin, par exemple, de ne pas continuer à envoyer des données à haut débit à un noeud mobile qui serait passé sur une liaison à bas débit, ce qui provoquerait une congestion de trafic. Ce processus est indépendant de la sélection des CoA.

Telle qu'elle est définie aujourd'hui, la gestion de la mobilité IP n'apporte qu'une solution incomplète pour réduire les multiples alternatives de configuration d'adresses. En particulier, l'enregistrement d'associations présente des limitations du fait qu'une nouvelle CoA n'est enregistrée que lorsque l'ancienne n'est plus utilisable, c'est-à-dire lorsque le routeur d'accès correspondant n'est plus joignable.

La possibilité offerte aux noeuds mobiles de configurer plusieurs adresses temporaires issues de plusieurs attachements (divers routeurs d'accès appartenant éventuellement à des réseaux visités fixes ou mobiles) signifie que les noeuds mobiles peuvent disposer d'un choix de types d'accès aux caractéristiques intrinsèques potentiellement très hétérogènes. Ces accès pourront différer selon plusieurs critères: qualité de service nominale, conditions de charge, fonctionnalités supportées, fournisseur, etc. Pour des raisons de service, de fiabilité ou de stratégie, il est judicieux que le noeud mobile privilégie l'un ou l'autre de ces accès selon des critères spécifiques. Une politique de choix doit alors être mise en place.

Selon le modèle des protocoles Mobile IP et Nemo-BS, c'est au noeud mobile qu'il revient de choisir son adresse temporaire CoA parmi les alternatives qui lui sont offertes. Un noeud mobile peut ainsi satisfaire à ses propres besoins, mais il ne peut pas satisfaire aux besoins des réseaux d'accès, généralement basés sur des règles d'ingénierie de trafic concernant plusieurs autres noeuds mobiles ainsi que sur des contraintes économiques et techniques. Les informations d'ingénierie de trafic sont généralement inconnues des noeuds mobiles et leur prise en compte nécessiterait des capacités de traitement supplémentaires. La sélection d'adresse temporaire par le noeud mobile n'est donc pas une solution satisfaisante.

Un but de la présente invention est d'apporter une solution alternative qui présente une plus grande souplesse pour la gestion des réseaux d'accès, en substituant au processus aléatoire de sélection d'adresse temporaire un mécanisme déterministe permettant par exemple à un fournisseur de service de mobilité de choisir l'adresse et donc l'interface la plus apte à satisfaire les exigences de service de ce fournisseur. Un autre but est que la solution s'applique à des noeuds qui découvrent de nouveaux réseaux IP au fur et à mesure de leurs déplacements, mais également à des noeuds mobiles qui, au démarrage, configurent et enregistrent une CoA.

L'invention propose ainsi un procédé d'affectation d'une adresse temporaire à un noeud mobile d'un système de télécommunications, ladite adresse temporaire étant enregistrée en association avec une adresse permanente du noeud mobile auprès d'un agent mère (5) chargé de retransmettre les flux à destination du noeud mobile en déplacement, comprenant les étapes suivantes :
- obtenir des adresses temporaires respectives du noeud mobile pour plusieurs routeurs d'accès du système détectés par le noeud mobile;
- collecter au noeud mobile des informations relatives à des caractéristiques de ces routeurs d'accès;
- transmettre, du noeud mobile à un module de gestion d'adresses temporaires d'un fournisseur de service de mobilité, une requête de sélection d'adresse contenant une partie au moins desdites informations collectées; et
- traiter la requête de sélection d'adresse au module de gestion pour sélectionner l'une des adresses temporaires pour le noeud mobile.
- retourner au noeud mobile (1) un message (REP) indiquant au moins un préfixe d'adresse identifiant l'adresse temporaire sélectionnée,
- sur réception du message, configurer le noeud mobile de façon à ce qu'il communique à travers le système par l'intermédiaire du routeur d'accès correspondant audit préfixe,
- mettre à jour l'association entre l'adresse temporaire sélectionnée et l'adresse permanente du noeud mobile auprès de l'agent mère du noeud mobile.

L'adresse temporaire est choisie parmi plusieurs adresses possibles en fonction de paramètres transmis par le noeud mobile. Le processus de remontée d'information auprès d'un équipement centralisé, par exemple co-localisé avec l'agent mère, permet de définir un algorithme de sélection d'adresse temporaire afin par exemple de pouvoir optimiser de l'ingénierie de trafic et proposer un service vérifiant les critères des qualités de service accordés aux noeuds mobiles.

Grâce à la centralisation de l'entité responsable du choix de l'adresse, on peut satisfaire aux besoins multiples de choix d'une adresse temporaire sans être pénalisé par le fait que les noeuds mobiles n'ont qu'une vision du réseau limitée aux seules informations sur les CoAs qu'ils peuvent configurer et les accès correspondants. Cette centralisation est également avantageuse pour des questions économiques, notamment en termes de complexité des noeuds mobiles.

Le module de gestion d'adresses temporaires peut retourner un message indiquant la CoA sélectionnée au noeud mobile, et celui-ci peut poursuivre la procédure de façon classique en signalant cette adresse à son agent mère. Une autre possibilité est que le module de gestion d'adresses temporaires signale directement la CoA sélectionnée à l'agent mère qui en avise le noeud mobile.

L'invention propose aussi des équipements et programmes pour la mise en oeuvre du procédé ci-dessus. Ainsi, un autre aspect de la présente invention se rapporte à un noeud mobile de communication, comprenant des moyens d'obtention d'adresses temporaires respectives pour plusieurs routeurs d'accès d'un système de télécommunications détectés par le noeud mobile, des moyens de collecte d'informations relatives à des caractéristiques desdits routeurs d'accès, des moyens de transmission à un module de gestion d'adresses temporaires d'un fournisseur de service de mobilité d'une requête de sélection d'adresse contenant une partie au moins desdites informations collectées, et des moyens pour recevoir un message indiquant au moins un préfixe d'adresse identifiant l'adresse temporaire sélectionnée et des moyens de configuration pour configurer le noeud mobile de façon à ce qu'il communique à travers le système par l'intermédiaire du routeur d'accès correspondant audit préfixe.

Un programme informatique selon l'invention, à exécuter par une unité de traitement d'un tel noeuds mobile de communication, comprend des instructions pour exécuter les étapes suivantes lors d'une exécution par l'unité de traitement:
- obtenir des adresses temporaires respectives pour plusieurs routeurs d'accès d'un système de télécommunications détectés par le noeud mobile;
- collecter des informations relatives à des caractéristiques desdits routeurs d'accès;
- transmettre à un module de gestion d'adresses temporaires d'un fournisseur de service de mobilité une requête de sélection d'adresse contenant une partie au moins desdites informations collectées; et
- recevoir un message indiquant au moins un préfixe d'adresse identifiant l'adresse temporaire sélectionnée ;
- configurer le noeud mobile de façon à ce qu'il communique à travers le système par l'intermédiaire du routeur d'accès correspondant audit préfixe.

Un autre aspect de la présente invention se rapporte à un module de gestion d'adresses temporaires pour un fournisseur de service de mobilité dans un système de télécommunications, comprenant des moyens pour recevoir d'un noeud mobile une requête de sélection d'adresse contenant des informations collectées par le noeud mobile relativement à des caractéristiques de routeurs d'accès respectifs auprès desquels le noeud mobile a obtenu des adresses temporaires, des moyens pour traiter la requête de sélection d'adresse afin de sélectionner l'une des adresses temporaires pour le noeud mobile, et des moyens de signalisation de l'adresse temporaire sélectionnée comprenant des moyens pour retourner au noeud mobile un message indiquant au moins le préfixe de l'adresse temporaire sélectionnée. Un tel module de gestion d'adresses temporaires consistera typiquement en un programme exécuté sur un ordinateur du fournisseur de service de mobilité, qui pourra être le même ordinateur que celui qui héberge l'agent mère pour le noeud mobile.

Un autre aspect encore de la présente invention se rapporte à un signal transmis d'un noeud mobile de communication vers un module de gestion d'adresses temporaires d'un fournisseur de service de mobilité dans un système de télécommunications. Ce signal transporte une requête de sélection d'adresse contenant des informations collectées par le noeud mobile relativement à des caractéristiques de plusieurs routeurs d'accès détectés par le noeud mobile, pour lesquels le noeud mobile a obtenu des adresses temporaires respectives.

D'autres particularités et avantages de la présente invention apparaîtront dans la description ci-après d'exemples de réalisation non limitatifs, en référence aux dessins annexés, dans lesquels :
- la figure 1 est un schéma d'un système de télécommunications convenant pour la mise en oeuvre d'un procédé selon l'invention; et
- la figure 2 est un organigramme d'un mode de réalisation du procédé selon l'invention.

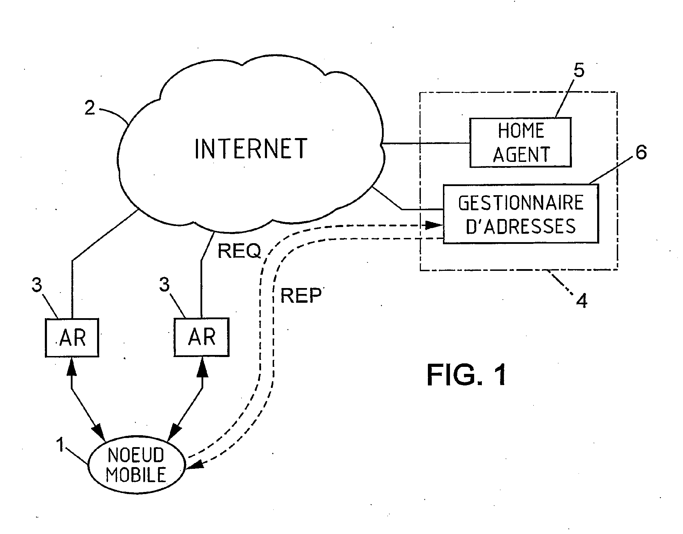

Le noeud mobile 1 montré sur la figure 1 peut consister en un terminal mobile ou un routeur mobile. Dans l'exemple représenté, il peut se raccorder à l'Internet 2 par l'intermédiaire de deux routeurs d'accès 3 (AR, "access router") appartenant aux installations respectives de deux fournisseurs d'accès à Internet. On comprendra que le procédé décrit ici est applicable au cas où le noeud mobile 1 a détecté plus de deux routeurs d'accès, et également au cas où un routeur d'accès donné 3 est capable de fournir des accès de plusieurs types différents.

Le noeud mobile 1 bénéficie des services d'un fournisseur de mobilité dont les installations 4 raccordées à l'Internet 2 comprennent des serveurs hébergeant des modules applicatifs d'agent mère (home agent) 5 et de gestion d'adresses temporaires 6. Dans l'exemple représenté, les modules 5 et 6 sont colocalisés, ce qui constitue l'architecture la plus simple. La fonction de gestion d'adresses temporaires peut d'ailleurs être réalisée en enrichissant les fonctionnalités offertes par l'agent mère 5. Dans une autre architecture possible, l'agent 5 et le module 6 sont sur des machines hôtes distinctes.

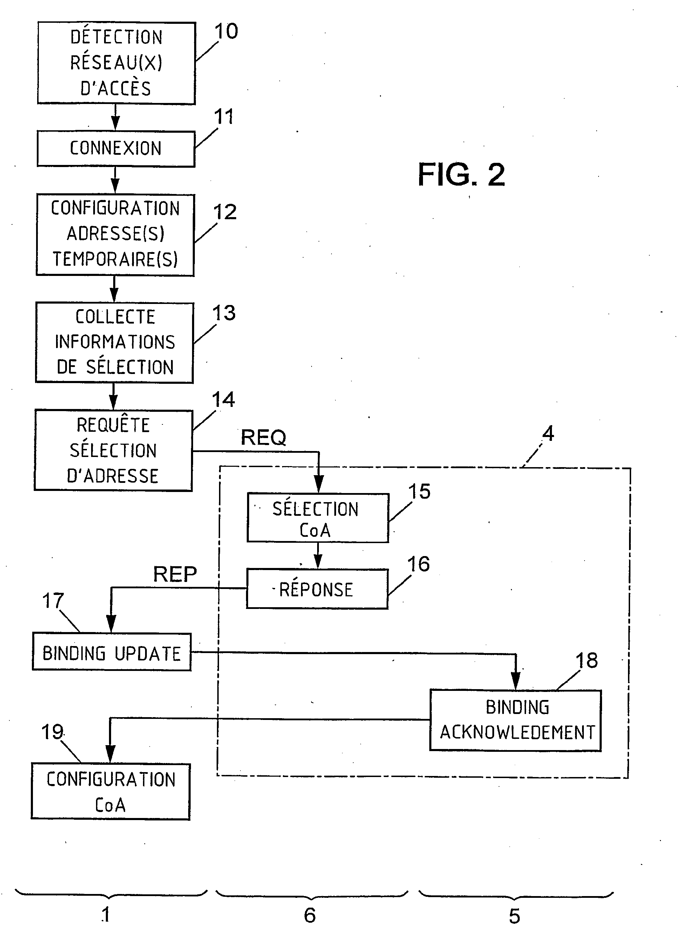

Pour l'accès à Internet, le noeud mobile 1 comporte des programmes, exécutés par une unité de traitement (CPU), qui mettent notamment en oeuvre les procédures des couches 1 à 3 du modèle OSI (Open System Interface). Les traitements effectués au noeud mobile 1 et correspondant à la sélection d'une adresse temporaire (CoA) sont illustrés par la partie gauche de la figure 2.

Les premières étapes 10, 11 sont les traitements de couches 1 et 2 effectués par le noeud mobile 1 pour détecter un ou plusieurs réseaux d'accès et s'y connecter. Ces traitements dépendent des technologies d'accès disponibles au niveau du noeud 1 et des routeurs 3, et sont bien connus de l'homme du métier. Ensuite, le noeud 1 en situation de mobilité configure une ou plusieurs adresses temporaires qu'il peut utiliser pour communiquer par l'intermédiaire des routeurs 3 (étape 12). A partir de là, le procédé selon l'invention diffère de la technique communément employée. Plutôt que de sélectionner lui-même une CoA parmi les adresses temporaires configurées, le programme noeud mobile 1 commence par collecter des informations de sélection auprès des routeurs d'accès 3 auxquels il est connecté.

Cette collecte 13 peut se faire au moyen de protocoles existants, avec ou sans ajout d'options spécifiques, ou en définissant un protocole spécifique. Une possibilité est de se fonder sur les protocoles actuellement étudiés par le groupe de travail DNA ("Detecting Network Attachement") de l'IETF, par exemple en utilisant les méthodes de présentation de routeurs dites "Fast Router Advertisment" et "RA Caching". Ces méthodes déterminent une identité pour chaque lien découvert ainsi que le(s) préfixe(s) utilisables sur ce lien pour les adresses IPv6. Elles reposent sur l'échange des messages RS/RA ("Router Solicitation / Router Advertisment") qui font partie du protocole NDP ("Neighbor Discovery Protocol"). Dans le cas d'un handover, on peut également utiliser le protocole CARD ("Candidate Access Router Discovery") élaboré par le groupe de travail Seamoby de l'IETF. CARD est un protocole extensible de détection des capacités des routeurs, par exemple en termes de compression de données, de contrôle d'accès ..., et d'informations d'identification telles que le préfixe ou l'adresse IP du routeur.

Certains des paramètres collectés à l'étape 13 peuvent être post-traités localement par le noeud mobile 1, mais ce n'est pas indispensable. Le noeud mobile 1 peut y ajouter des paramètres qui lui sont propres, notamment des paramètres relatifs à des caractéristiques de ses interfaces qui coopèrent avec les routeurs d'accès 3. Le noeud mobile 1 dispose de l'information fournie par les routeurs d'accès 3 et d'information locale, par exemple sur les caractéristiques dynamiques de ses interfaces. Toute cette information est agrégée, avec suppression des éventuelles redondances, puis éventuellement pré-formatée selon le protocole employé pour le transfert vers le module de gestion 6, pour être incluse dans la requête REQ envoyée à l'étape 14. Ce formatage peut être du même genre que celui utilisé dans les messages "Binding Update" du protocole Mobile IPv6, et la réponse REP que retournera le module 6 peut symétriquement être formatée comme les messages "Binding Acknowledgement".

L'ensemble des paramètres pertinents à inclure dans les informations de sélection de la requête REQ peut dépendre des besoins du noeud mobile 1 et/ou de la politique du fournisseur de service de mobilité. Les informations collectées à l'étape 13 auprès des routeurs d'accès 3 peuvent notamment comprendre:
- un ensemble de préfixes d'adresse utilisables, avec leurs attributs respectifs de longueur de paquets et de durée de vie;
- une qualité de service (QoS) disponible;
- une durée de vie pour la disponibilité du lien;
- une identité du fournisseur d'accès qui contrôle le routeur 3 ...

Elles peuvent être complétées par un ou plusieurs des paramètres suivants, propres au noeud mobile 1:
- une QoS requise;
- une bande passante nominale et/ou de crête requise;
- une taille typique de paquets;
- pour chaque interface d'accès du noeud:
   - le type d'interface;
   - son état (actif ou inactif);
   - la bande passante disponible;
   - l'identification du ou des routeurs d'accès auxquels elle est éventuellement connectée ...

La requête REQ est envoyée à l'étape 14 en utilisant une adresse temporaire qui a été configurée à l'étape 12. A réception de cette requête, le module 6 la traite pour sélectionner la CoA pour le noeud mobile 1 à l'étape 15, puis signale la CoA sélectionnée à l'étape 16. Dans l'exemple considéré, la signalisation consiste à envoyer au noeud 1 un message de réponse qui contient la CoA sélectionnée, ou un préfixe de celle-ci. Le noeud 1 lance alors la mise à jour d'association auprès de son agent mère 5 en lui envoyant un message "Binding Update" à l'étape 17. L'agent mère 5 enregistre la nouvelle CoA et en accuse réception au noeud 1 à l'étape 18 par un message "Binding Acknowledgement". Le noeud 1 termine alors la procédure en configurant à l'étape 19 la CoA qui lui a été indiquée. Il communique alors à travers le système par l'intermédiaire du routeur d'accès correspondant à la CoA ou au préfixe qui lui ont été indiqués.

La sélection d'adresse 15 peut être opérée selon divers algorithmes, prenant en compte une plus ou moins grande richesse de paramètres. Une possibilité parmi d'autres est décrite ci-après.

Dans cet exemple, le gestionnaire 6 examine successivement les interfaces du noeud 1 qui sont à l'état actif, en leur affectant un index de sélection d'interface (ISI). Cet index ISI résulte d'une comparaison entre la bande passante disponible et celle(s) requise(s) par le noeud mobile 1 (ou par le réseau entier dans le cas d'un routeur mobile). Si la bande passante disponible est acceptable d'après l'index ISI, le gestionnaire 6 considère successivement les routeurs d'accès auxquels l'interface est connectée, en leur affectant index de sélection de routeur ISR dont la valeur est initialisée à celle de l'index ISI correspondant. Le fournisseur d'accès est identifié et une base de données de fournisseurs d'accès est interrogée pour recueillir des informations de tarification utilisées pour pondérer l'index ISR. L'index ISR peut encore être pondéré en fonction de la durée de vie indiquée pour la disponibilité du lien fourni, et en fonction d'une comparaison entre la QoS disponible et celle requise par le noeud. Si l'index ISR est acceptable, le gestionnaire 6 considère successivement les valeurs de préfixe disponibles pour ce routeur, en leur affectant index de sélection de préfixe ISP dont la valeur est initialisée à celle de l'index ISR correspondant. Pour réévaluer l'index ISP, le gestionnaire 6 tient compte de la durée de vie attribuée au préfixe et de sa longueur de paquets, comparée à la longueur typique souhaitée pour le noeud mobile 1. Après avoir ainsi parcouru toutes les interfaces, tous les routeurs d'accès disponibles et toutes les valeurs de préfixe correspondantes, le gestionnaire 6 construit une liste de préfixes ordonnée en fonction des index ISR, le préfixe d'index optimal figurant en tête de liste.

Cette liste de préfixes est transmise au noeud mobile 1 dans le message de réponse REP, ce qui indique au noeud 1 celle des adresses temporaires qui a été sélectionnée comme CoA. Le noeud mobile 1 signale alors à son agent mère 5 la CoA sélectionnée, ayant le préfixe en tête de liste. Si cette adresse devient indisponible, il peut prendre l'adresse suivante dans la liste (s'il y en a une) ou relancer la procédure de sélection à partir de l'étape 13 de la figure 2.

Dans une autre réalisation possible, le module de gestion 6 indique directement à l'agent mère 5 l'adresse qui a été sélectionnée, et le noeud mobile 1 en est avisé. Les adresses temporaires obtenues doivent alors être intégralement contenues dans la requête REQ transmise par le noeud mobile 1.

Le procédé peut avoir de nombreuses variantes par rapport au mode de réalisation particulier qui a été décrit. Il n'est notamment pas dépendant des détails des protocoles employés par les noeuds pour communiquer. Il est transposable sans difficulté à la version 4 du protocole IP.

## Revendications

1. Procédé d'affectation d'une adresse temporaire à un noeud mobile (1) d'un système de télécommunications, ladite adresse temporaire étant enregistrée en association avec une adresse permanente du noeud mobile auprès d'un agent mère (5) chargé de retransmettre les flux à destination du noeud mobile en déplacement, comprenant les étapes suivantes :
- obtenir des adresses temporaires respectives du noeud mobile pour plusieurs routeurs d'accès (3) du système détectés par le noeud mobile;
- collecter au noeud mobile des informations relatives à des caractéristiques desdits routeurs d'accès;
- transmettre, du noeud mobile à un module de gestion d'adresses temporaires (6) d'un fournisseur de service de mobilité, une requête de sélection d'adresse (REQ) contenant une partie au moins desdites informations collectées; et
- traiter la requête de sélection d'adresse au module de gestion pour sélectionner l'une des adresses temporaires pour le noeud mobile,
- retourner au noeud mobile (1) un message (REP) indiquant au moins un préfixe d'adresse identifiant l'adresse temporaire sélectionnée,
- sur réception du message, configurer le noeud mobile de façon à ce qu'il communique à travers le système par l'intermédiaire du routeur d'accès correspondant audit préfixe,
- mettre à jour l'association entre l'adresse temporaire sélectionnée et l'adresse permanente du noeud mobile auprès de l'agent mère du noeud mobile.

2. Procédé selon la revendication 1, dans lequel le message retourné par le module de gestion d'adresses temporaires (6) contient une liste ordonnée de préfixes d'adresse.

3. Procédé selon l'une quelconque des revendications 1 et 2, dans lequel la requête de sélection d'adresse (REQ) contient en outre des paramètres relatifs à des caractéristiques des interfaces du noeud mobile (1) coopérant avec les routeurs d'accès (3) pour lesquels des adresses temporaires ont été obtenues.

4. Noeud mobile de communication (1), comprenant des moyens (10-12) d'obtention d'adresses temporaires respectives pour plusieurs routeurs d'accès (3) d'un système de télécommunications détectés par le noeud mobile, des moyens (13) de collecte d'informations relatives à des caractéristiques desdits routeurs d'accès, des moyens (14) de transmission à un module de gestion d'adresses temporaires (6) d'un fournisseur de service de mobilité d'une requête de sélection d'adresse (REQ) contenant une partie au moins desdites informations collectées, des moyens pour recevoir un message (REP) indiquant au moins un préfixe d'adresse identifiant l'adresse temporaire sélectionnée et des moyens de configuration pour configurer le noeud mobile de façon à ce qu'il communique à travers le système par l'intermédiaire du routeur d'accès correspondant audit préfixe.

5. Noeud mobile selon la revendication 4, dans lequel la requête de sélection d'adresse (REQ) contient en outre des paramètres relatifs à des caractéristiques des interfaces du noeud mobile (1) coopérant avec les routeurs d'accès (3) pour lesquels des adresses temporaires ont été obtenues.

6. Programme informatique à exécuter par une unité de traitement d'un noeud mobile de communication (1), comprenant des instructions pour exécuter les étapes suivantes lors d'une exécution par l'unité de traitement:
- obtenir des adresses temporaires respectives pour plusieurs routeurs d'accès (3) d'un système de télécommunications détectés par le noeud mobile;
- collecter des informations relatives à des caractéristiques desdits routeurs d'accès;
- transmettre à un module de gestion d'adresses temporaires (6) d'un fournisseur de service de mobilité une requête de sélection d'adresse (REQ) contenant une partie au moins desdites informations collectées;
- recevoir un message (REP) indiquant au moins un préfixe d'adresse identifiant l'adresse temporaire sélectionnée ;
- configurer le noeud mobile de façon à ce qu'il communique à travers le système par l'intermédiaire du routeur d'accès correspondant audit préfixe.

7. Programme informatique selon la revendication 6, dans lequel la requête de sélection d'adresse (REQ) contient en outre des paramètres relatifs à des caractéristiques des interfaces du noeud mobile (1) coopérant avec les routeurs d'accès (3) pour lesquels des adresses temporaires ont été obtenues.

## Claims

1. Method for allocating a temporary address to a mobile node (1) of a telecommunications system, said temporary address being registered in association with a permanent address of the mobile node with a home agent (5) responsible for forwarding the data streams to the roaming mobile node, comprising the following steps:
- obtaining respective temporary addresses of the mobile node for several of the system's access routers (3) detected by the mobile node;
- collecting at the mobile node information relating to characteristics of said access routers;
- transmitting, from the mobile node to a temporary address management module (6) of a mobility service provider, an address selection request (REQ) containing at least a portion of said collected information; and
- processing the address selection request at the management module in order to select one of the temporary addresses for the mobile node,
- returning to the mobile node (1) a message (REP) indicating at least one address prefix identifying the selected temporary address,
- on receipt of the message, configuring the mobile node so that it communicates through the system by means of the access router corresponding to said prefix,
- updating the association between the selected temporary address and the permanent address of the mobile node with the home agent of the mobile node.

2. Method according to Claim 1, wherein the message returned by the temporary address management module (6) contains an ordered list of address prefixes.

3. Method according to either one of Claims 1 and 2, wherein the address selection request (REQ) also contains parameters relating to characteristics of the interfaces of the mobile node (1) interacting with the access routers (3) for which the temporary addresses have been obtained.

4. Communication mobile node (1), comprising means (10-12) for obtaining respective temporary addresses for several telecommunications system access routers (3) detected by the mobile node, means (13) for collecting information relating to characteristics of said access routers, means (14) for transmitting, to a temporary address management module (6) of a mobility service provider, an address selection request (REQ) containing at least a portion of said collected information, means for receiving a message (REP) indicating at least one address prefix identifying the selected temporary address and configuration means for configuring the mobile node so that it communicates through the system by means of the access router corresponding to said prefix.

5. Mobile node according to Claim 4, wherein the address selection request (REQ) also contains parameters relating to characteristics of the interfaces of the mobile node (1) interacting with the access routers (3) for which temporary addresses have been obtained.

6. Computer program to be executed by a processing unit of a communication mobile node (1), comprising instructions for executing the following steps during an execution by the processing unit:
- obtaining respective temporary addresses for several telecommunications system access routers (3) detected by the mobile node;
- collecting information relating to the characteristics of said access routers;
- transmitting, to a temporary address management module (6) of a mobility service provider, an address selection request (REQ) containing at least a portion of said collected information;
- receiving a message (REP) indicating at least one address prefix identifying the selected temporary address;
- configuring the mobile node so that it communicates through the system by means of the access router corresponding to said prefix.

7. Computer program according to Claim 6, wherein the address selection request (REQ) also contains parameters relating to characteristics of the interfaces of the mobile node (1) interacting with access routers (3) for which temporary addresses have been obtained.

## Patentansprüche

1. Verfahren zur Zuweisung einer vorübergehenden Adresse an einen mobilen Knoten (1) eines Telekommunikationssystems, wobei die vorübergehende Adresse in Verbindung mit einer Daueradresse des mobilen Knotens bei einem Home Agent (5) gespeichert ist, der die Aufgabe hat, die Ströme an den in Bewegung befindlichen mobilen Knoten weiterzuleiten, das die folgenden Schritte enthält:
- Erhalt der jeweiligen vorübergehenden Adressen des mobilen Knotens für mehrere Zugangsrouter (3) des Systems, die vom mobilen Knoten erfasst werden;
- Sammeln, im mobilen Knoten, von Informationen bezüglich von Merkmalen der Zugangsrouter;
- Übertragen, vom mobilen Knoten zu einem Verwaltungsmodul vorübergehender Adressen (6) eines Mobilitätsdiensteanbieters, einer Adressenauswahlanforderung (REQ), die mindestens einen Teil der gesammelten Informationen enthält; und
- Verarbeiten der Adressenauswahlanforderung im Verwaltungsmodul, um eine der vorübergehenden Adressen für den mobilen Knoten auszuwählen,
- Zurücksenden, an den mobilen Knoten (1), einer Mitteilung (REP), die mindestens ein Adressen-Präfix angibt, das die ausgewählte vorübergehende Adresse identifiziert,
- bei Empfang der Mitteilung, Konfigurieren des mobilen Knotens derart, dass er über das System mittels des dem Präfix entsprechenden Zugangsrouters kommuniziert,
- Aktualisieren der Assoziation zwischen der ausgewählten vorübergehenden Adresse und der Daueradresse des mobilen Knotens beim Home Agent des mobilen Knotens.

2. Verfahren nach Anspruch 1, bei dem die vom Verwaltungsmodul vorübergehender Adressen (6) zurückgesendete Mitteilung eine geordnete Liste von Adressen-Präfixen enthält.

3. Verfahren nach einem der Ansprüche 1 und 2, bei dem die Adressenauswahlanforderung (REQ) außerdem Parameter bezüglich von Merkmalen der Schnittstellen des mobilen Knotens (1) enthält, die mit den Zugangsroutern (3) zusammenwirken, für die vorübergehende Adressen erhalten wurden.

4. Mobiler Kommunikationsknoten (1), der Folgendes enthält: Einrichtungen (10-12) für den Erhalt jeweiliger vorübergehender Adressen für mehrere Zugangsrouter (3) eines Telekommunikationssystems, die vom mobilen Knoten erfasst wurden, Einrichtungen (13) zum Sammeln von Informationen bezüglich von Merkmalen der Zugangsrouter, Einrichtungen (14) zur Übertragung, an ein Verwaltungsmodul vorübergehender Adressen (6) eines Mobilitätsdiensteanbieters, einer Adressenauswahlanforderung (REQ), die mindestens einen Teil der gesammelten Informationen enthält, Einrichtungen zum Empfang einer Mitteilung (REP), die mindestens ein Adressen-Präfix angibt, das die ausgewählte vorübergehende Adresse identifiziert, und Konfigurationseinrichtungen, um den mobilen Knoten so zu konfigurieren, dass er über das System mittels des dem Präfix entsprechenden Zugangsrouters kommuniziert.

5. Mobiler Knoten nach Anspruch 4, bei dem die Adressenauswahlanforderung (REQ) außerdem Parameter bezüglich von Merkmalen der Schnittstellen des mobilen Knotens (1) enthält, die mit den Zugangsroutern (3) zusammenwirken, für die vorübergehende Adressen erhalten wurden.

6. EDV-Programm, das von einer Verarbeitungseinheit eines mobilen Kommunikationsknotens (1) auszuführen ist, das Anweisungen enthält, um bei einer Ausführung durch die Verarbeitungseinheit die folgenden Schritte auszuführen:
- Erhalt der jeweiligen vorübergehenden Adressen für mehrere Zugangsrouter (3) eines Telekommunikationssystems, die von dem mobilen Knoten erfasst werden;
- Sammeln der Informationen bezüglich von Merkmalen der Zugangsrouter;
- Übertragen, an ein Verwaltungsmodul vorübergehender Adressen (6) eines Mobilitätsdiensteanbieters, einer Adressenauswahlanforderung (REQ), die zumindest einen Teil der gesammelten Informationen enthält;
- Empfangen einer Mitteilung (REP), die mindestens ein Adressen-Präfix angibt, das die ausgewählte vorübergehende Adresse identifiziert;
- Konfigurieren des mobilen Knotens derart, dass er über das System mittels des dem Präfix entsprechenden Zugangsrouters kommuniziert.

7. EDV-Programm nach Anspruch 6, bei dem die Adressenauswahlanforderung (REQ) außerdem Parameter bezüglich von Merkmalen der Schnittstellen des mobilen Knotens (1) enthält, die mit den Zugangsroutern (3) zusammenwirken, für die vorübergehende Adressen erhalten wurden.
